# EUROPÄISCHE PATENTSCHRIFT

(11) **EP 0 951 413 B1**
(45) Veröffentlichungstag und Bekanntmachung des Hinweises auf die Patenterteilung: **10.04.2002**
(21) Anmeldenummer: 97954942.5
(22) Anmeldetag: 22.12.1997
(51) Int. Cl.: B60T 8/36, F16K 31/06, H01F 7/16, H01F 7/08

(54) **ELEKTROMAGNETVENTIL UND VERFAHREN ZUR HUBEINSTELLUNG EINES MAGNETVENTILS**
ELECTROMAGNETIC VALVE AND PROCESS FOR SETTING THE STROKE OF AN ELECTROMAGNETIC VALVE
VANNE ELECTROMAGNETIQUE ET PROCEDE DE REGLAGE DE LA COURSE D'UNE VANNE ELECTROMAGNETIQUE

(30) Priorität: 14.01.1997 DE 19700980
(43) Veröffentlichungstag der Anmeldung: 27.10.1999
(73) Patentinhaber: Continental Teves AG & Co. oHG, 60488 Frankfurt (DE)
(72) Erfinder: GOOSSENS, Andre, F., L., B-2840 Rumst (BE); ROTTIERS, Antoine, B-1840 Londerzeel (BE)
(86) Internationale Anmeldenummer: EP9707240
(87) Internationale Veröffentlichungsnummer: WO9831578

(56) Entgegenhaltungen:
- CH-A- 309 663
- DE-A- 2 208 183
- DE-A- 4 003 606
- DE-A- 4 030 571
- DE-A- 4 132 471
- DE-A- 4 141 546
- DE-A- 4 211 307
- DE-A- 4 235 077
- DE-A- 4 332 538

## Beschreibung

Die Erfindung betrifft ein Elektromagnetventil mit einem in einem Aufnahmekörper eingesetzten Ventilgehäuse nach dem Oberbegriff des Patentanspruchs 1.

Aus der DE 40 30 571 A1 ist bereits ein Elektromagnetventil hervorgegangen, das in seiner elektromagnetisch nicht erregten, geschlossenen Grundstellung mittels einem an einem Ventilsitz im Ventilgehäuse anliegenden Ventilstößel einen Druckmitteldurchlauf trennt. In der elektromagnetisch erregten Stellung des Ventils ist der Magnetkreis über den die Spule weitgehend umschließenden Jochring, über den Hülsenkörper, den im Hülsenkörper eingesetzten Magnetkern, den am Magnetkern anliegenden Magnetanker, über das Ringteil und über das Ventilgehäuse geschlossen. Damit zwischen dem Jochring und dem Ventilgehäuse kein Kurzschluß des Magnetkreises entstehen kann, ist der Hülsenkörper aus einem nicht magnetischen Material. Dies hat jedoch den Nachteil, daß durch den nicht magnetischen Hülsenkörper der Magnetfluß infolge des zu überbrückenden magnetischen Widerstandes geschwächt ist. Die bauliche Konstruktion sieht deshalb ein relativ weit in das Innere der Spule tiefgezogenen Jochring vor, um dieser Schwächung des Magnetfeldes entgegenzuwirken.

In der DE 41 41 546 A1 ist ein Elektromagnetventil beschrieben, das in seiner elektromagnetisch nicht erregten Grundstellung einen Druckmitteldurchlaß zwischen dem Ventilschließglied und dem Ventilsitz aufweist. Bei diesem Ventil wird bei elektromagnetischer Erregung der Ventilspule über den Jochring, den Hülsenkörper, den Magnetanker, das als Magnetkern wirksame Ringteil sowie über das Ventilgehäuse der Magnetkreis der Ventilspule geschlossen. Damit der Magnetfluß nicht über den Jochring, den Hülsenkörper und den Magnetkern kurzgeschlossen ist und somit ein Betätigen des Magnetankers ausbleiben würde, ist der Hülsenkörper gleichfalls - wie zum vorangenannten Stand der Technik zitiert - aus einem magnetisch nicht leitenden Material. Durch den nicht magnetischen Hülsenkörper ergibt sich ein magnetischer Widerstand, der den Magnetfluß vom Jochring zum Magnetanker behindert.

In der DE-A-40 03 606 wird ein wenigstens zweischichtiges, aus weichmagnetischem und unmagnetischem Verbundwerkstoff bestehendes Ankerführungsrohr vorgeschlagen. Die weichmagnetische Schicht soll eine Abschwächung des Magnetkreises verhindern, hingegen soll durch die unmagnetische Schicht das Kleben des Ankers am Ankerführungsrohr vermieden werden. Das Ankerführungsrohr erstreckt sich mit seinem offenen Ende in das Ventilgehäuse und ist darin mit einer Ringmutter befestigt. Das Ventilgehäuse weist zur Aufnahme der Ringmutter einen verstärkten Bund auf, an dem sich zwecks Magnetkreisverbindung ein die Ventilspule umschließender Jochring abstützt.

Die DE-A-43 32 538 beschreibt einen metallischen Ventilblock, der wenigstens eine gestufte Aufnahmebohrung für ein Elektromagnetventil aufweist. Das Elektromagnetventil ist mit einem Befestigungsflansch versehen, der in eine Stufe der Aufnahmebohrung eingesetzt und durch eine Verstemmung aus dem Metall des Ventilblocks lagegesichert ist.

In der gattungsbildenden DE-A-4 211 307 ist das Ventilgehäuse des Elektromagnetventils mittels eines Sprengrings in dem Aufnahmekörper befestigt.

Daher ist es die Aufgabe der vorliegenden Erfindung, ein Elektromagnetventil der bereits bekannten Bauarten dahingehend zu verbessern, daß durch einfache, kostengünstige Maßnahmen ein funktionssicheres, kleinbauendes und universell verwendbares Elektromagnetventil geschaffen wird, das sich durch eine einfache Befestigung auszeichnet.

Diese Aufgabe wird erfindungsgemäß für ein Elektromagnetventil der gattungsbildenden Art durch die kennzeichnenden Merkmale des Patentanspruchs 1 gelöst.

Weitere Merkmale und Vorteile der Erfindung gehen im nachfolgenden aus den Unteransprüchen und zweier Ausführungsbeispiele hervor, die nachfolgend anhand von Zeichnungen erläutert werden.

Es zeigen:
- Fig. 1: ein in der Grundstellung elektromagnetisch nicht erregtes, offenes Elektromagnetventil,
- Fig. 2: ein in der Grundstellung elektromagnetisch nicht erregtes, geschlossenes Elektromagnetventil.

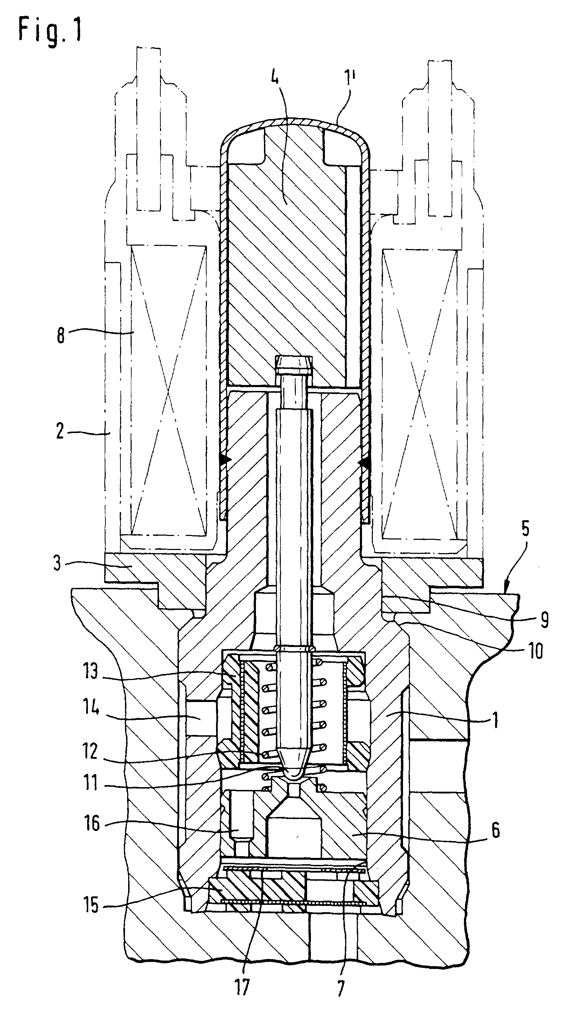

Die Fig. 1 zeigt in erheblich vergrößerter Darstellung die konstruktiven Einzelheiten eines in der Grundstellung elektromagnetisch nicht erregten, in Offenstellung befindlichen Elektromagnetventils. Das Ventilgehäuse 1 ist in Patronenbauweise ausgeführt und mittels einer Verstemm- bzw. Scherbefestigung in einer außerordentlich einfachen Aufnahmebohrung eines Aufnahmekörpers (Ventilblock) 5 gehalten. Auf zweckmäßige Weise kommt die Befestigung des Ventilgehäuses 1 im Aufnahmekörper 5 mittels eines von außen am Ventilgehäuse 1 aufgestülpten Ringteils 3 zustande, das zwecks Verdrängung von Werkstoffvolumen des Aufnahmekörpers 5 in Richtung auf eine Anphasung 10 des Ventilgehäuses 1 mit einem Absatz versehen ist. Zwangsläufig ist der Aufnahmekörper 5 aus einem weicheren Werkstoff hergestellt als das Elektromagnetventil, so daß das an einem Stufenabschnitt 9 des Ventilgehäuses 1 geführte Ringteil 3 das vorzugsweise aus einer Leichtmetallegierung bestehende Werkstoffvolumen des Aufnahmekörpers 5 in Richtung des Stufenabschnitts 9 und damit auf die Anphasung 10 des Ventilgehäuses 1 verdrängen kann.

Aus den vorangegangenen Erläuterungen folgt zwangsläufig, daß das Ventilgehäuse 1, der das Ventilgehäuse 1 verschließende, domförmige Gehäuseabschnitt 1', der Jochring 2 und der Magnetanker 4 aus einem den Magnetfluß leitenden Werkstoff bestehen, wobei der Magnetkreis zwischen Jochring 2 und dem Ventilgehäuse 1 über das am Ventilgehäuse 1 angebrachte, ferromagnetische Ringteil 3 hergestellt werden wird.

Bei näherer Betrachtung der Fig. 1 zeigt sich, daß das Ventilgehäuse 1 an der vom hülsenförmigen Gehäuseabschnitt 1' entfernt gelegenen Stirnfläche eine an den Ventilsitzkörper im Durchmesser angepaßte Öffnung 7 aufweist, in der der Ventilsitzkörper 6 spielfrei eingefügt ist. Die Tiefe der an den Nenndurchmesser des Ventilsitzkörpers 6 angepaßten Öffnung 7 ist in jedem Fall größer gewählt, als die Dicke des Ventilsitzkörpers 6, damit bei Bedarf ein gewünschtes Einjustieren des Ventilsitzkörpers 6 in der Öffnung 7 gewährleistet werden kann. Das Ventilgehäuse 1 weist im Bereich der Bohrung des Aufnahmekörpers 5 die Kontur eines hohlzylinderförmigen, in Richtung des Aufnahmekörpers 5 geöffneten Drehteils auf, an das sich zur Bildung des geschlossenen, hülsenförmigen Gehäuseabschnitts 1' ein im Außendurchmesser verkleinerter, zylinderförmiger Fortsatz anschließt, der sich bis in die Ventilspule 8 erstreckt. Gemäß der Erfindung ist der hülsenförmige Gehäuseabschnitt 1' aus einem ferromagnetischen Material. Der hülsenförmige Gehäuseabschnitt 1' ist domförmig geschlossen und vorzugsweise im Tiefziehverfahren aus rostfreiem Stahl hergestellt. Der Gehäuseabschnitt 1' kann sowohl als Schweißals auch Hartlotverbindung am Fortsatz des Ventilgehäuses 1 druckmitteldicht befestigt sein. Zwischen dem Gehäuseabschnitt 1' und dem Ventilgehäuse 1 ist der eingangs bereits erwähnte Stufenabschnitt 9 mit einer daran angrenzenden Anphasung 10 versehen, an dem nach der Einpreßoperation das Ringteil 3 in einer relativ kleinen Abstufung im Aufnahmekörper 5 kraftschlüssig verharrt.

Der innerhalb des hülsenförmigen Gehäuseabschnitts 1' beweglich angeordnete Magnetanker 4 steht im domförmigen Endbereich des Gehäuseabschnitts 1' auf Anschlag, während gleichzeitig das an einen Stößel angeformte kugelförmige Ventilschließglied 11 in seiner elektromagnetisch nicht erregten, offenen Schaltstellung gegenüber dem Ventilsitzkörper 6 verharrt. Für die vorbezeichnete Grundstellung ist am stößelförmigen Abschnitt des Ventilschließgliedes 11 eine Druckfeder 12 befestigt, die sich mit ihrem einen Ende am Ventilsitzkörper 6 abstützt und den Stößel an den Magnetanker 4 andrückt.

Der sich daraus ergebende Magnetankerhub zum Zwecke des Schließvorganges während einer elektromagnetischen Erregung wird folglich von der Position des hülsenförmigen Gehäuseabschnitts 1' am Fortsatz des Ventilgehäuses 1 bestimmt. Ein zweckmäßiges Verfahren zur Hubeinstellung des Magnetankers 4 sieht deshalb vor, daß der Magnetanker 4 unter Wirkung der Druckfeder 12 mit seiner vom Ventilschließglied 11 abgewandten Stirnfläche zunächst im Dombereich des Gehäuseabschnittes 1' zum Anliegen gebracht wird, wonach der hülsenförmige Gehäuseabschnitt 1' auf dem Fortsatz des Ventilgehäuses 1 in Richtung des Ventilschließgliedes 11 verschoben wird, bis ein unter geringem Druck den offenen Ventilsitzkörper 6 durchströmendes Druckmittelvolumen ein für die gewünschte Hubeinstellung des Magnetankers 4 repräsentativen Volumendurchsatz erreicht, wonach anschließend der hülsenförmige Gehäuseabschnitt 1' in der entsprechenden Position am Fortsatz kraftschlüssig fixiert wird. Dies geschieht vorzugsweise mittels Elektronenstrahlschweißung.

Ergänzend zu den vorangegangenen Einzelheiten soll im nachfolgenden kurz auf weitere Details nach Fig. 1 eingegangen werden. Dies sind im einzelnen die Anordnung eine Ringfilters 13 oberhalb des Ventilsitzkörpers 6 im Mittelabschnitt der Öffnung 7 des Ventilgehäuses 1 auf Höhe eines druckmittelführenden Querkanals 14. Ferner befindet sich unterhalb des Ventilsitzkörpers 6 ein in die Öffnung 7 eingelassener Plattenfilter 15. Zwischen dem Plattenfilter 15 und einem den Ventilsitzkörper 6 durchdringenden Bypass-Kanal 16 ist ein Plattenrückschlagventil 17 angeordnet. Ferner ist der Abbildung zu entnehmen, daß der im Aufnahmekörper 5 anliegende Endbereich des Ventilgehäuses 1 schneidenförmig angephast ist, so daß beim Einpreßvorgang des Ventilgehäuses 1 mittels des Ringteils 3 der Schneidenabschnitt zum Zwecke einer guten Dichtwirkung in den Bohrungsgrund des Aufnahmekörpers 5 eindrückt und damit die für den Verstemmvorgang im Bereich des Ringteils 3 erforderliche Gegenkraft erzeugt.

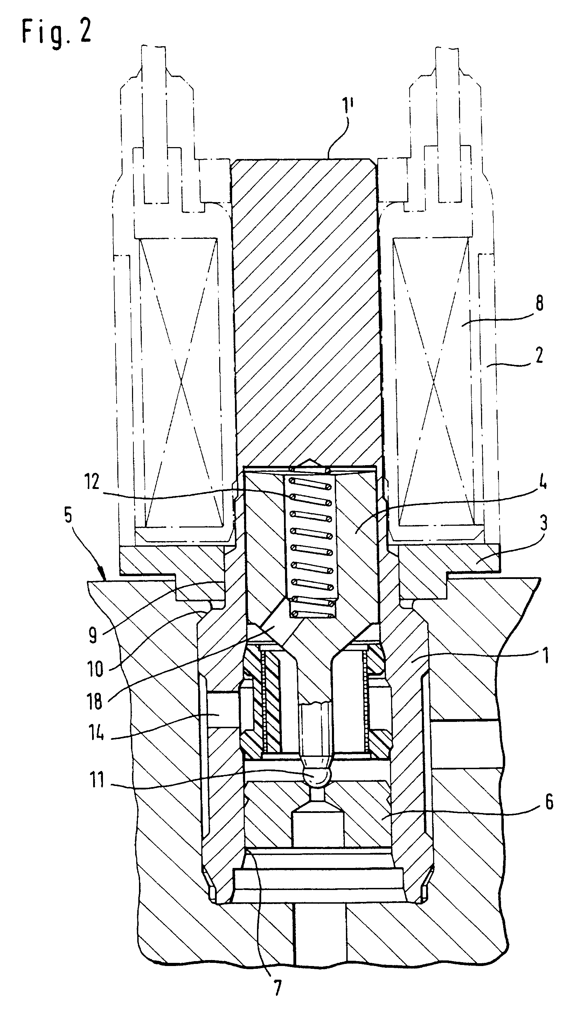

Das Elektromagnetventil nach Fig. 2 zeigt in vielen Einzelmerkmalen einen zu Fig. 1 vergleichbaren Aufbau, weshalb im nachfolgenden lediglich auf die Unterschiede des nunmehr beschriebenen Elektromagnetventils nach Fig. 2 Bezug genommen wird. In der abbildungsgemäßen, geschlossenen Grundstellung des Elektromagnetventils verharrt das einstückig mit dem Magnetanker 4 verbundene Ventilschließglied 11 unter Wirkung einer Druckfeder 12 am Ventilsitzkörper 6. Das Ventilgehäuse 1 ist einstückig mit dem als Vollzylinderkernteil ausgeführten Gehäuseabschnitt 1' derart verbunden, daß ein möglichst dünnwandiger Übergangsbereich zwischen dem Magnetkernteil (Gehäuseabschnitt 1') und dem Ventilgehäuse 1 verbleibt. Dieser Übergangsbereich ist hinsichtlich seiner Wandstärke auf ein notwendiges Festigkeitsmaß des Elektromagnetventils zu begrenzen, um in diesem Bereich die magnetischen Verluste gering zu halten. Um das sogenannte Magnetankerkleben nach elektromagnetischer Erregung zu verhindern, weist die vom Ventilschließglied 11 abgewandte Stirnfläche des Magnetankers 4 eine konkave Form auf, womit sich ohne die Notwendigkeit zum Einfügen einer Einlegscheibe eine luftspaltorientierte Ankerstirnfläche ergibt. Ein etwaiger Druckmittelaustausch zwischen dem Bereich außerhalb und innerhalb des Magnetankers 4 wird mittels einer Druckausgleichsbohrung 18 möglichst zentral geführt, ohne daß eine bisher verordnete magnetkraftschwächende Druckausgleichsnut am Umfang des Magnetankers 4 erforderlich ist. Die Bewegung des Magnetankers ist bei Tieftemperaturbetrieb des Druckmittels erheblich verbessert. Auch die konische Ausbildung der Ankerstirnfläche begünstigt die Druckmittelverteilung im Bereich des Magnetankers 4.

Das nach Fig. 2 dargestellte, in der Grundstellung geschlossene Elektromagnetventil zeichnet sich durch eine besonders einfache Konstruktion insbesondere im Hinblick auf die flaschenförmige, einstückige Kontur des Ventilgehäuses 1 mit dem Gehäuseabschnitt 1' aus, wobei durch Verwendung von ferromagnetischen Materialien für das Ventilgehäuse keine bisher bekannten, antimagnetischen Übergangswiderstände zwischen dem Jochring 2 und dem Gehäuseabschnitt 1' entstehen. Der Magnetanker 4 ist zweckmäßigerweise einteilig mit dem Ventilschließglied 11 verbunden, was erheblich zur Einsparung von Herstellkosten und Baugröße beiträgt. Gleichfalls kann dieses Elektromagnetventil nach Fig. 2 infolge der Identität von Elementen, die bereits aus der Beschreibung des Elektromagnetventils nach Fig. 1 hervorgegangen sind, dessen Vorteile nutzen. Dies sind u.a., die relativ einfache Verstemmung des Ventilgehäuses 1 im Aufnahmekörper 5 mittels des Ringteils 3, wobei die Abdichtung des Ventilgehäuses 1 in der Bohrung des Aufnahmekörpers 5 einerseits durch die auf die Gehäuseunterkante wirksame Vorspannkraft des Ringteils 3 als auch durch die Verformung des Gehäusematerials der Aufnahmebohrung 5 im Bereich der Anphasung 10 zustandekommt.

Hinsichtlich der Einstellung des Magnetankerhubs im Ventilgehäuse braucht lediglich der Ventilsitzkörper 6 in der Öffnung 7 in die gewünschte Position verschoben und fixiert zu werden, in der ein das Elektromagnetventil unter geringem Druck durchströmendes Druckmittelvolumen ein für die gewünschte Magnetankerhubeinstellung repräsentativer Volumendurchsatz bei zunächst offenem Ventilsitzkörper 6 erreicht wird. Zur Überbrückung der Wirkung der Druckfeder 12 wird während der Hubeinstellung der Magnetanker 4 elektromagnetisch erregt.

### Bezugszeichenliste

- 1: Ventilgehäuse
- 1': Gehäuseabschnitt
- 2: Jochring
- 3: Ringteil
- 4: Magnetanker
- 5: Aufnahmekörper
- 6: Ventilsitzkörper
- 7: Plattenventil
- 8: Ventilspule
- 9: Stufenabschnitt
- 10: Anphasung
- 11: Ventilschließglied
- 12: Druckfeder
- 13: Ringfilter
- 14: Druckmittelbohrung
- 15: Plattenfilter
- 16: Bypass-Kanal
- 17: Plattenrückschlagventil
- 18: Druckausgleichsbohrung

## Patentansprüche

1. Elektromagnetventil mit einem în einem Aufnahmekörper (5) eingesetzten Ventilgehäuse (1), das einen Ventilsitzkörper (6) und ein von einem Magnetanker (4) gesteuertes Ventilschließglied (11) aufweist, mit einer in Nähe des Magnetankers (4) angeordneten, von einem Jochring (2) begrenzten Ventilspule (8), mit einem geschlossenen, den Magnetfluß leitenden und das Ventilgehäuse verschließenden Gehäuseabschnitt (1'), an dem sich der Magnetanker (4) abstützt, wobei das Ventilgehäuse (1), der das Ventilgehäuse (1) verschließende Gehäuseabschnitt (1'), der Jochring (2) und der Magnetanker (4) aus einem ferromagnetischen Werkstoff bestehen, wobei zur Herstellung einer Magnetkreisverbindung zum Ventilgehäuse (1) der Jochring (2) an einem außen am Ventilgehäuse (1) aufgestülpten ferromagnetischen Ringteil (3) anliegt, das als Magnetkreisrückschlußplatte von einem Stufenabschnitt (9) am Ventilgehäuse (1) aufgenommen und geführt ist, und wobei der Stufenabschnitt (9) zwischen dem im Aufnahmekörper (5) eingesetzten Ventilgehäuse (1) und dem am Ventilgehäuse (1) angebrachten Gehäuseabschnitt (1') vorgesehen ist, **dadurch gekennzeichnet, daß** der zwischen dem Gehäuseabschnitt (1') und dem Ventilgehäuse (1) angeordnete Stufenabschnitt (9) mit einer Anphasung (10) versehen ist, die das Ringteil (3) aufnimmt, und daß das Werkstoffvolumen des Aufnahmekörpers (5) mittels des Ringteils (3) in Richtung des Stufenabschnitts (9) auf die Anphasung (10) verdrängt ist.

2. Elektromagnetventil nach Anspruch 1, **dadurch gekennzeichnet, daß** das Ventilgehäuse (1) an einer vom Gehäuseabschnitt (1') entfernt gelegenen Stirnfläche eine an den Außendurchmesser des Ventilsitzkörpers (6) angepaßte Öffnung (7) aufweist, in der der Ventilsitzkörper (6) spielfrei eingefügt ist, wobei die Öffnung (7) vom Bohrungsgrund des Aufnahmekörpers (5) begrenzt ist.

3. Elektromagnetventil nach Anspruch 1 oder 2, **dadurch gekennzeichnet, daß** die Tiefe der an den Nenndurchmesser des Ventilsitzkörpers (6) angepaßten Öffnung (7) größer ist als die Dicke des Ventilsitzkörpers (6).

4. Elektromagnetventil nach Anspruch 1, **dadurch gekennzeichnet, daß** das Ventilgehäuse (1) im Bereich des Aufnahmekörpers (5) die Kontur eines hohlzylinderförmigen, in Richtung des Aufnahmekörpers (5) geöffneten Drehteils aufweist, an den sich zur Bildung des geschlossenen Gehäuseabschnitts (1') ein im Außendurchmesser verkleinerte, zylinderförmige Fortsatz anschließt.

5. Elektromagnetventil nach einem der Ansprüche 1, 2 oder 4, **dadurch gekennzeichnet, daß** der Gehäuseabschnitt (1') aus einer domförmig geschlossenen Hülse besteht, die vorzugsweise als Tiefziehteil aus einem rostfreien Stahl hergestellt ist.

6. Elektromagnetventil nach Anspruch 4, **dadurch gekennzeichnet, daß** der Gehäuseabschnitt (1') als Schweiß- oder Hartlotverbindung am Fortsatz des Ventilgehäuses (1') befestigt ist.

7. Elektromagnetventil nach Anspruch 4, **dadurch gekennzeichnet, daß** der Gehäuseabschnitt (1') als Vollzylinderkernteil einstückig mit dem Ventilgehäuse (1) hergestellt ist, wobei ein dünnwandiger Übergangsbereich zwischen dem Gehäuseabschnitt (1') und dem Ventilgehäuse (1) besteht.

8. Elektromagnetventil nach Anspruch 1, **dadurch gekennzeichnet, daß** die vom Ventilschließglied (11) abgewandte Stirnfläche des Magnetankers (4) konkav geformt ist.

## Claims

1. Electromagnetic valve with a valve housing (1) inserted into an accommodating member (5) which includes a valve seat member (6) and a valve closure member (11) controlled by a magnet armature (4), with a valve coil (8) arranged close to the magnet armature (4) and delimited by a yoke ring (2), with a closed housing portion (1') which closes the valve housing and conducts the magnetic flux, on which the magnet armature (4) is supported, wherein the valve housing (1), the housing portion (1') which closes the valve housing (1), the yoke ring (2) and the magnet armature (4) are made of a ferromagnetic material, wherein for providing a magnetic circuit connection to the valve housing (1), the yoke ring (2) bears against a ferromagnetic annular piece (3) that is slipped from outwards on the valve housing (1) and, as a magnetic-circuit shortcircuit plate, is accommodated and guided by a stepped portion (9) at the valve housing (1), and wherein the stepped portion (9) is arranged between the valve housing (1) inserted into the accommodating member (5) and the housing portion (1') provided on the valve housing (1),
**characterized in that** the stepped portion (9) disposed between the housing portion (1') and the valve housing (1) has a chamfer (10) which accommodates the annular piece (3), and **in that** the material volume of the accommodating member (5) is displaced by way of the annular piece (3) in the direction of the stepped portion (9) onto the chamfer (10).

2. Electromagnetic valve as claimed in claim 1,
**characterized in that** the valve housing (1) at an end surface remote from the housing portion (1') includes an opening (7) which is conformed to the outside diameter of the valve seat member (6) and in which the valve seat member (6) is inserted without a clearance, the said opening (7) being delimited by the bore bottom of the accommodating member (5).

3. Electromagnetic valve as claimed in claim 1 or claim 2,
**characterized in that** the depth of the opening (7) which is adapted to the nominal diameter of the valve seat member (6) exceeds the size of the valve seat member (6).

4. Electromagnetic valve as claimed in claim 1,
**characterized in that** the valve housing (1) in the area of the accommodating member (5) exhibits the contour of a hollow-cylindrical turned part which is open in the direction of the accommodating member (5) and adjacent to which is a cylindrical extension which is decreased in its outside diameter to form the closed housing portion (1').

5. Electromagnetic valve as claimed in any one of claims 1, 2, or 4,
**characterized in that** the housing portion (1') is made of a sleeve which is in particular closed like a dome and is preferably deepdrawn from stainless steel.

6. Electromagnetic valve as claimed in claim 4,
**characterized in that** the housing portion (1') is attached to the extension of the valve housing (1) in a welded or hard-soldered connection.

7. Electromagnetic valve as claimed in claim 4,
**characterized in that** the housing portion (1') is configured as a solid cylinder core part integrally with the valve housing (1), and a thin-walled transition area exists between the housing portion (1') and the valve housing (1).

8. Electromagnetic valve as claimed in claim 1,
**characterized in that** the end surface of the magnet armature (4) remote from the valve closure member (11) has a concave configuration.

## Revendications

1. Valve à électro-aimant comprenant un boîtier de valve (1), qui est monté dans un corps de logement (5) et comporte un corps de siège de valve (6) et un obturateur de valve (11) commandé par une armature mobile d'aimant (4), une bobine de valve (8), disposée à proximité de l'armature mobile d'aimant (4) et délimitée par une culasse (2), et une section de boîtier (1') fermée qui conduit le flux magnétique et ferme le boîtier de valve et sur laquelle l'armature mobile d'aimant (4) prend appui, le boîtier de valve (1), la section de boîtier (1') fermant le boîtier de valve (1), la culasse (2) et l'armature mobile d'aimant (4) étant constituée d'une matière ferromagnétique, tandis que, pour réaliser une jonction de circuit magnétique vers le boîtier de valve (1), la culasse (2) est appliquée sur une pièce annulaire (3) ferromagnétique qui est enfilée de l'extérieur sur le boîtier de valve (1) et qui, en tant que plaque de fermeture de circuit magnétique, est reçue et guidée par une section étagée (9) située sur le boîtier de valve (1), la section étagée (9) étant prévue entre le boîtier de valve (1) monté dans le corps de logement (5) et la section de boîtier (1') solidaire du boîtier de valve (1), **caractérisée en ce que** la section étagée (9) disposée entre la section de boîtier (1') et le boîtier de valve (1) est pourvue d'un chanfrein (10) qui reçoit la pièce annulaire (3) et **en ce que** le volume de matière du corps de logement (5) est refoulé au moyen de la pièce annulaire (3) en direction de la section étagée (9), sur le chanfrein (10).

2. Valve à électro-aimant suivant la revendication 1, **caractérisée en ce que**, sur une surface frontale éloignée de la section de boîtier (1'), le boîtier de valve (1) comporte une ouverture (7) qui est adaptée au diamètre extérieur du corps de siège de valve (6) et dans laquelle le corps de siège de valve (6) est emboîté sans jeu, l'ouverture (7) étant délimitée par le fond d'alésage du corps de logement (5).

3. Valve à électro-aimant suivant la revendication 1 ou 2, **caractérisée en ce que** la profondeur de l'ouverture (7) adaptée au diamètre nominal du corps de siège de valve (6) est supérieure à la hauteur du corps de siège de valve (6).

4. Valve à électro-aimant suivant la revendication 1, **caractérisée en ce que**, dans la zone du corps de logement (5), le boîtier de valve (1) présente la forme d'une pièce réalisée au tour, en forme de cylindre creux et ouverte en direction du corps de logement (5), que prolonge une partie de prolongement de forme cylindrique et à diamètre extérieur plus petit, en vue de la formation de la section de boîtier (1') fermée.

5. Valve à électro-aimant suivant l'une des revendications 1, 2 ou 4, **caractérisée en ce que** la section de boîtier (1') est constituée d'un manchon fermé en forme de dôme qui est de préférence réalisé en acier inoxydable sous forme d'une pièce emboutie.

6. Valve à électro-aimant suivant la revendication 4, **caractérisée en ce que** la section de boîtier (1') est fixée à la partie de prolongement du boîtier de valve (1') sous forme d'une liaison par soudage ou par brasage fort.

7. Valve à électro-aimant suivant la revendication 4, **caractérisée en ce que** la section de boîtier (1') est réalisée d'une pièce avec le boîtier de valve (1), en tant que pièce formant noyau cylindrique plein, une zone de transition à paroi mince se présentant entre la section de boîtier (1') et le boîtier de valve (1).

8. Valve à électro-aimant suivant la revendication 1, **caractérisée en ce que** la surface frontale de l'armature mobile d'aimant (4) qui est située du côté opposé à l'obturateur de valve (11) présente une forme concave.
